# EUROPEAN PATENT SPECIFICATION

(11) **EP 2 573 421 B1**
(45) Date of publication and mention of the grant of the patent: **25.11.2020**
(21) Application number: 11783510.8
(22) Date of filing: 16.05.2011
(51) Int. Cl.: F16F 9/36, F16J 15/3284, C09K 3/10, C08G 77/04

(54) **DAMPER**
DÄMPFER
AMORTISSEUR

(30) Priority: 27.08.2010 JP 2010191191; 19.05.2010 JP 2010115262
(43) Date of publication of application: 27.03.2013
(73) Proprietor: Nifco Inc., Kanagawa, 239-8560 (JP)
(72) Inventor: ODA, Hayato, Yokosuka-shi, Kanagawa 239-8560 (JP); TAKEI, Yoshihisa, Yokosuka-shi, Kanagawa 239-8560 (JP)
(74) Representative: Dr. Gassner & Partner mbB
(86) International application number: PCT/JP2011/061229
(87) International publication number: WO 2011/145576

(56) References cited:
- EP-A1- 1 686 283
- EP-A2- 1 004 631
- CN-A- 1 853 054
- DE-A1- 3 921 326
- DE-U1- 29 580 388
- GB-A- 2 407 846
- JP-A- 9 197 816
- JP-A- H09 197 816
- JP-A- 2005 042 896
- JP-A- 2008 267 415
- JP-B2- 2 808 118
- US-A1- 2006 113 154

## Description

### Field of Technology

The present invention relates to a damper applying a brake on a rotation of a driven gear which engages with, for example, a gear or a rack.

### Background Art

In Patent Document 1, there is described a damper wherein one portion of a rotating shaft protrudes from a housing in which a damper oil is filled, and wherein a rotor brake plate rotatably housed inside the housing is provided to be connected to a lower end portion of the rotating shaft. Then, between the housing and the rotating shaft, there is provided an annular seal material preventing the damper oil from leaking to an outside of the housing. Also, in the damper, as for the annular seal material, there is used an O-ring formed by ethylene-propylene rubber (EPDM) having a non-swellable property relative to a silicone oil.

Patent Document 1: Japanese Unexamined Patent Publication No. 2005-30550

EP1686283 A1, which is considered 1to be the closest prior art, discloses a rotational damper with a annular seal material according to the pre-amble of claim 1.

### Disclosure of the Invention

### Problems to be Solved by the Invention

In view of the above-mentioned fact, the present invention provides a damper which can reduce a starting torque, and also which can suppress a variability of a torque in a low-speed area.

### Means for Solving the Problems

The first aspect of the present invention provides a damper comprising a housing; a damper oil filled inside the housing; a rotor including a rotating shaft whose one portion protrudes from the housing, and a rotor brake plate connected to a lower end portion of the rotating shaft and rotatably housed inside the housing; and an annular seal material provided to be disposed between the housing and the rotating shaft in order to prevent the damper oil from leaking to an outside of the housing. The annular seal material is formed by silicone rubber having a hardness of 25 degrees or above and 45 degrees or less according to the Durometer Hardness Testing (type A) of JIS K 6253.

In the aforementioned aspect, in order to prevent the damper oil filled inside the housing from leaking outside of the housing, there is provided to be disposed the annular seal material between the rotating shaft of the rotor and the housing. The annular seal material is formed by the silicone rubber having the hardness of 25 degrees or above and 45 degrees or less according to the Durometer Hardness Testing (type A) of JIS K 6253. Consequently, a torque caused by the annular seal material is suppressed. As a result, a starting torque is reduced, and also a variability of the torque in a low-speed rotational area is reduced as well.

Incidentally, if the hardness of the silicone rubber composing the annular seal material exceeds 45 degrees, the aforementioned effect cannot be obtained, and also if the hardness of the silicone rubber composing the annular seal material does not reach 25 degrees, due to a lack of the hardness of the silicone rubber, molding the annular seal material becomes difficult.

As for a second aspect of the present invention, in the first aspect of the present invention, in the silicone rubber, a loss tangent may be 0.12 or above and 0.25 or less at a temperature of 23°C ± 2°C obtained from a dynamic viscoelastic measurement in the frequency of 1 Hz.

In the aforementioned aspect, in the silicone rubber composing the annular seal material, the loss tangent is 0.12 or above and 0.25 or less at the temperature of 23°C ± 2°C obtained from the dynamic viscoelastic measurement in the frequency of 1Hz. Consequently, stick-slip caused by the annular seal material is difficult to occur, and a torque waveform stabilizes.

Incidentally, in a case where the loss tangent of the silicone rubber composing the annular seal material does not reach 0.12, the aforementioned effect cannot be obtained. Also, if the loss tangent of the silicone rubber composing the annular seal material exceeds 0.25, due to the lack of the hardness of the silicone rubber, molding the annular seal material becomes difficult.

Incidentally, the loss tangent is shown by the loss tangent (tan δ) = loss elastic modulus (a viscous component) / storage elastic modulus (an elastic component).

### Effect of the Invention

The first aspect of the present invention has the aforementioned structure so as to be capable of reducing the starting torque, and also capable of suppressing the variability of the torque in the low-speed area.

The second aspect of the present invention has the aforementioned structure, so that the torque waveform stabilizes.

### Brief Description of the Drawings

Fig. 1 is a cross-sectional view taken along a cross-sectional line 1 to 1 in Fig. 2.
Fig. 2 is a plan view showing a rotation damper which is the present embodiment.
Fig. 3 is a plan view showing an O-ring which is the present embodiment.
Fig. 4 is a cross-sectional view taken along a cross-sectional line 4 to 4 in Fig. 3.
Fig. 5 is a torque characteristic chart showing a rotation following capability when the hardness of a silicone rubber composing the O-ring of the rotation damper is 27 degrees.
Fig. 6 is a torque characteristic chart showing a rotation following capability when the hardness of the silicone rubber composing the O-ring of the rotation damper is 30 degrees.
Fig. 7 is a torque characteristic chart showing a rotation following capability when the hardness of the silicone rubber composing the O-ring of the rotation damper is 40 degrees.
Fig. 8 is a torque characteristic chart showing a rotation following capability when the hardness of the silicone rubber composing the O-ring of the rotation damper is 45 degrees.
Fig. 9 is a torque characteristic chart showing a rotation following capability when the hardness of the silicone rubber composing the O-ring of the rotation damper is 50 degrees.
Fig. 10 is a torque characteristic chart showing a rotation following capability when the hardness of the silicone rubber composing the O-ring of the rotation damper is 80 degrees.
Fig. 11 is a graph showing a time variation of a torque when the hardness of the silicone rubber composing the O-ring of the rotation damper is 27 degrees.
Fig. 12 is a graph showing a time variation of the torque when the hardness of the silicone rubber composing the O-ring of the rotation damper is 30 degrees.
Fig. 13 is a graph showing a time variation of the torque when the hardness of the silicone rubber composing the O-ring of the rotation damper is 40 degrees.
Fig. 14 is a graph showing a time variation of the torque when the hardness of the silicone rubber composing the O-ring of the rotation damper is 45 degrees.
Fig. 15 is a graph showing a time variation of the torque when the hardness of the silicone rubber composing the O-ring of the rotation damper is 50 degrees.
Fig. 16 is a graph showing a time variation of the torque when the hardness of the silicone rubber composing the O-ring of the rotation damper is 80 degrees.
Fig. 17 is a graph showing a relationship between each measurement frequency and loss tangent when the silicone rubber composing the O-ring of the rotation damper is A, B, C, and D.
Fig. 18 is a graph showing a time variation of the torque when the silicone rubber composing the O-ring of the rotation damper is A.
Fig. 19 is a graph showing a time variation of the torque when the silicone rubber composing the O-ring of the rotation damper is B.
Fig. 20 is a graph showing a time variation of the torque when the silicone rubber composing the O-ring of the rotation damper is C.
Fig. 21 is a graph showing a time variation of the torque when the silicone rubber composing the O-ring of the rotation damper is D.
Fig. 22 is a graph showing a distribution of an opening actuation time of an opening and closing door of an in-car console box in which the rotation damper of the present embodiment is attached.
Fig. 23 is a graph showing a distribution of the opening actuation time of the opening and closing door of the in-car console box in which a rotation damper of a comparative example is attached.
Fig. 24 is a graph showing a relationship between a time course and an angular velocity at a time of an opening actuation of the opening and closing door of the in-car console box in which the rotation damper of the present embodiment is attached.
Fig. 25 is a graph showing a relationship between a time course and an angular velocity at the time of the opening actuation of the opening and closing door of the in-car console box in which the rotation damper of the comparative example is attached.
Fig. 26 is a graph showing a distribution of the opening actuation time of the opening and closing door of the in-car console box in which the rotation damper using the O-ring, produced by treatment with a sandblasting (SB#120) in a mold, is attached.
Fig. 27 is a graph showing a distribution of the opening actuation time of the opening and closing door of the in-car console box in which the rotation damper using the O-ring, produced by treatment with the sandblasting (SB#220) in the mold, is attached.
Fig. 28 is a graph showing a distribution of the opening actuation time of the opening and closing door of the in-car console box in which the rotation damper using the O-ring, produced by treatment with the sandblasting (SB#320) in the mold, is attached.
Fig. 29 is a graph showing a distribution of the opening actuation time of the opening and closing door of the in-car console box in which the rotation damper using the O-ring, produced by treatment with the sandblasting (SB#400) in the mold, is attached.

### Best Modes of Carrying out the Invention

Next, a damper according to the present embodiment will be explained.

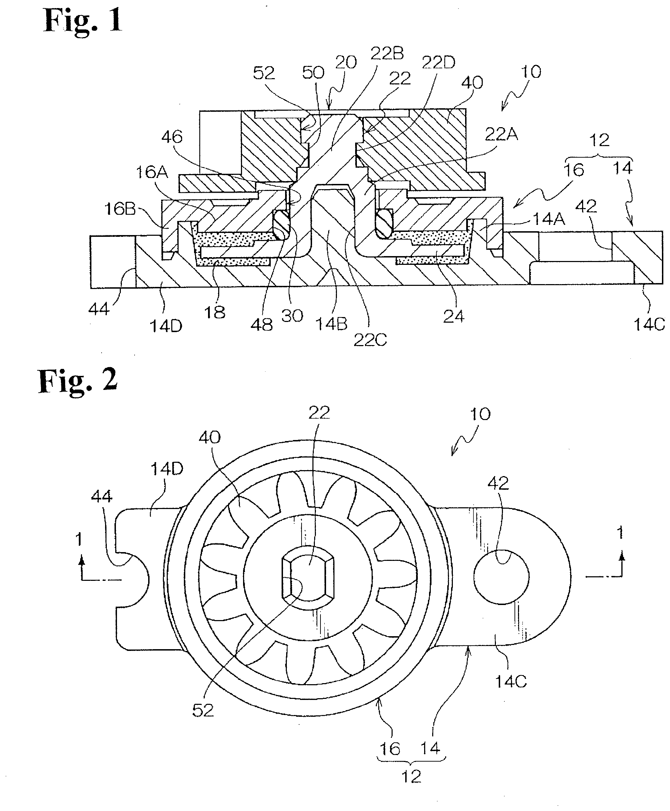

Incidentally, Fig. 1 is a cross-sectional view taken along a cross-sectional line 1 to 1 in Fig. 2, and Fig. 2 is a plan view of a rotation damper which is the present embodiment.

As shown in Fig. 2, a rotation damper 10 of the present embodiment comprises a housing 12, and the housing 12 includes a housing main body 14 molded by synthetic resin, and a cap 16 molded by synthetic resin.

As shown in Fig. 1, inside the housing 12, there is filled a silicone oil (a damper oil) 18 as the damper oil. Also, a rotor 20 of the rotation damper 10 includes a rotating shaft 22 whose one portion protrudes from the housing 12, and a rotor brake plate 24 provided to be connected to a lower end portion of the rotating shaft 22, and rotatably housed inside the housing 12. An O-ring (an annular seal material) 30 as the annular seal material of the rotation damper 10 is provided to be disposed between the housing 12 and the rotating shaft 22, and prevents the silicone oil 18 from leaking to an outside of the housing 12. Also, in a portion of the rotating shaft 22 protruding from the housing 12, there is attached a driven gear 40.

The housing main body 14 is structured by a cylinder portion 14A with a bottom; a support axis 14B with a circular shape in a plane cross-sectional surface, which is provided to be connected to the center of the cylinder portion 14A and protrudes to a side higher than the cylinder portion 14A; and attachment pieces 14C and 14D provided to be connected in opposed outside positions of the cylinder portion 14A in such a way as to extend to an outside in a radial direction. Incidentally, in the attachment piece 14C, there is provided an attachment hole 42, and in the attachment piece 14D, there is provided an attachment concave portion 44.

In the center of the cap 16, there is provided a circular through hole 46 wherein the rotating shaft 22 passes through. Also, the cap 16 includes a circular top plate 16A, and a peripheral wall 16B provided to be connected by circling around a peripheral border of the top plate 16A. In a portion continuing into a lower end portion of the through hole 46 in the top plate 16A, there is provided an O-ring housing portion 48 which is concentric with the through hole 46, and is step-like with a diameter larger than the through hole 46. Inside the peripheral wall 16B, there is fitted the cylinder portion 14A of the housing main body 14.

The rotating shaft 22 is structured by a large-diameter axis portion 22A, and an attachment axis portion 22B which is concentric with the large-diameter axis portion 22A, and continues into an upper side of the large-diameter axis portion 22A. Also, in the large-diameter axis portion 22A, there is formed a bearing portion 22C comprising a cylinder-shaped concave portion. In the bearing portion 22C, there is rotatably inserted the support axis 14B of the housing main body 14 from a downside. On the other hand, in the attachment axis portion 22B of the rotating shaft 22, there is attached the driven gear 40 in such a way as to integrally rotate.

In order to integrally rotate the driven gear 40, the attachment axis portion 22B of the rotating shaft 22 is molded in an I-cut shape, and in lower portions of parallel faces, there are respectively provided locking concave portions 22D. Also, the rotor brake plate 24 is provided in a disk shape, which is concentric with the large-diameter axis portion 22A, in an outer circumference of a lower end of the large-diameter axis portion 22A. Moreover, in the driven gear 40, there is provided an attachment hole 52 including an engagement portion 50 corresponding to the locking concave portions 22D on an inner circumferential face.

Incidentally, the rotation damper 10 can be attached to an intended position by the attachment hole 42 of the attachment piece 14C of the housing main body 14, and the attachment concave portion 44 of the attachment piece 14D. Also, the rotation damper 10 can be engaged with a gear putting a brake by the driven gear 40, a rack, and the like.

### (Regarding a movement of the rotation damper)

Next, a movement of the rotation damper 10 of the present embodiment will be explained.

When a force attempting to rotate acts on the driven gear 40 of the rotation damper 10, the rotor brake plate 24 rotates inside the housing 12 wherein the silicone oil 18 is filled. Then, if the rotor brake plate 24 rotates inside the silicone oil 18, a viscosity resistance and a shear resistance of the silicone oil 18 act on the rotor brake plate 24 so as to put a brake on a rotation of the driven gear 40.

Therefore, the rotation damper 10 puts a brake on a rotation or a movement of the gear wherein the driven gear 40 engages, the rack, and the like so as to be capable of slowing the rotation or the movement thereof.

### (Regarding the O-ring)

Next, the O-ring 30 of the present embodiment will be explained.

The O-ring 30 is formed by silicone rubber, and the silicone rubber has a hardness of 25 degrees or above and 45 degrees or less according to the Durometer Hardness Testing (type A) of JIS K 6253 without self-lubrication. Incidentally, the self-lubrication means that the silicone rubber does not include a lubricant component.

For example, the silicone rubber has the above-mentioned hardness in a structure without including a self-lubricating additive agent. Incidentally, the self-lubricating additive agent is methyl phenyl silicone oil, dimethyl silicone oil, and the like.

Therefore, by making the silicone rubber with the above-mentioned hardness of 25 degrees or above and 45 degrees or less, a torque caused by the O-ring 30 is suppressed so as to reduce a starting torque of the rotation damper 10, and also to reduce a variability of the torque in a low-speed rotational area of the rotation damper 10. Incidentally, it is preferable that the above-mentioned hardness of the silicone rubber is 25 degrees or above and 40 degrees or less. Also, it is more preferable that the above-mentioned hardness of the silicone rubber is 30 degrees or above and 40 degrees or less.

Also, if the hardness of the silicone rubber composing the O-ring 30 exceeds 45 degrees, the aforementioned effect cannot be obtained, and also if the hardness of the silicone rubber composing the O-ring 30 does not reach 25 degrees, due to a lack of the hardness of the silicone rubber, molding the annular seal material becomes difficult.

Also, in the silicone rubber, a loss tangent (tan δ) is 0.12 or above and 0.25 or less at a temperature of 23°C ± 2°C obtained from a dynamic viscoelastic measurement in the frequency of 1Hz.

Therefore, by making the loss tangent (tan δ), in the frequency of the silicone rubber of 1Hz, 0.12 or above and 0.25 or less, stick-slip caused by the O-ring 30 is difficult to occur, and a torque waveform of the rotation damper 10 stabilizes.

Also, in a case where the loss tangent, in the frequency of the silicone rubber composing the O-ring 30 of 1Hz, does not reach 0.12, the aforementioned effect cannot be obtained. Also, if the loss tangent, in the frequency of the silicone rubber composing the O-ring 30 of 1Hz, exceeds 0.25, due to the lack of the hardness of the silicone rubber, molding the annular seal material becomes difficult. Incidentally, it is preferable that the aforementioned loss tangent (tan δ) of the silicone rubber is 0.13 or above and 0.25 or less.

Therefore, the torque of the rotation damper 10 caused by the O-ring 30 is low, and there is no starting torque.

### (First Measurement)

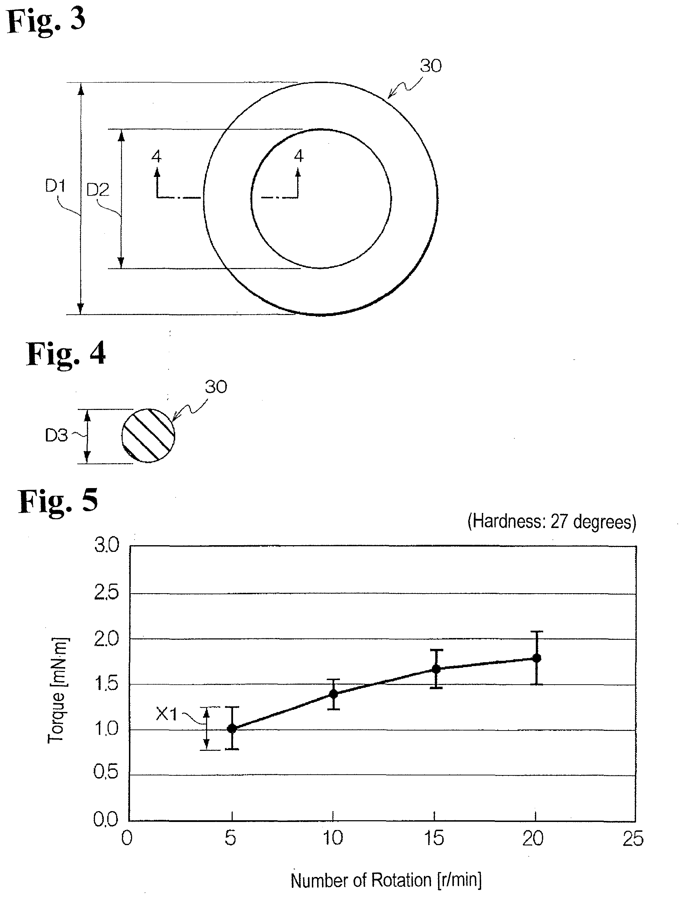

In the present embodiment, there is measured a torque characteristic showing a rotation following capability of the rotation damper 10. In the O-ring 30 used in the first measurement, an outer diameter D1 shown in Fig. 3 and Fig. 4 is 5.62 mm; an inner diameter D2 is 3.5 mm; a diameter (a cross-sectional diameter) of a circular cross-sectional surface D3 is 1.06 mm; a compression allowance is 14.14%; and an inner-diameter extension rate is 3.43%.

In a measurement method of the torque characteristic showing the rotation following capability, the rotation damper 10 is disposed in an attachment on a lower side of a micro torque measurement device (type MD-202R manufactured by ONO SOKKI CO., LTD.) and is rotated, and the torque is measured by a torque detection portion on an upper side of the micro torque measurement device. Incidentally, the measurement sample number n of each hardness is 30, and a temperature at a measurement time is 23°C ± 2°C.

### (Result of the first measurement)

Fig. 5 is a torque characteristic chart showing the rotation following capability when the hardness of the silicone rubber composing the O-ring 30 is 27 degrees.

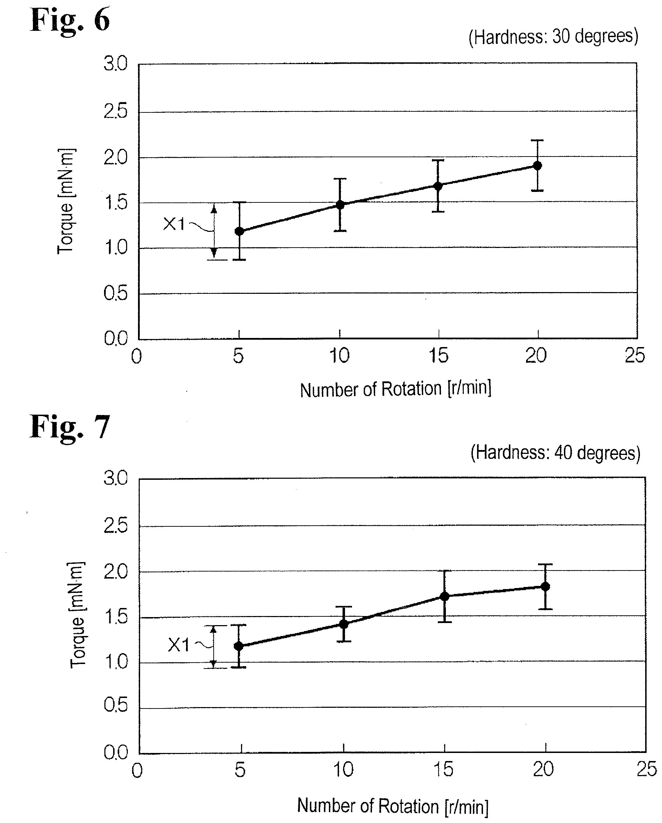

Also, Fig. 6 is a torque characteristic chart showing the rotation following capability when the hardness of the silicone rubber composing the O-ring 30 is 30 degrees.

Also, Fig. 7 is a torque characteristic chart showing the rotation following capability when the hardness of the silicone rubber composing the O-ring 30 is 40 degrees.

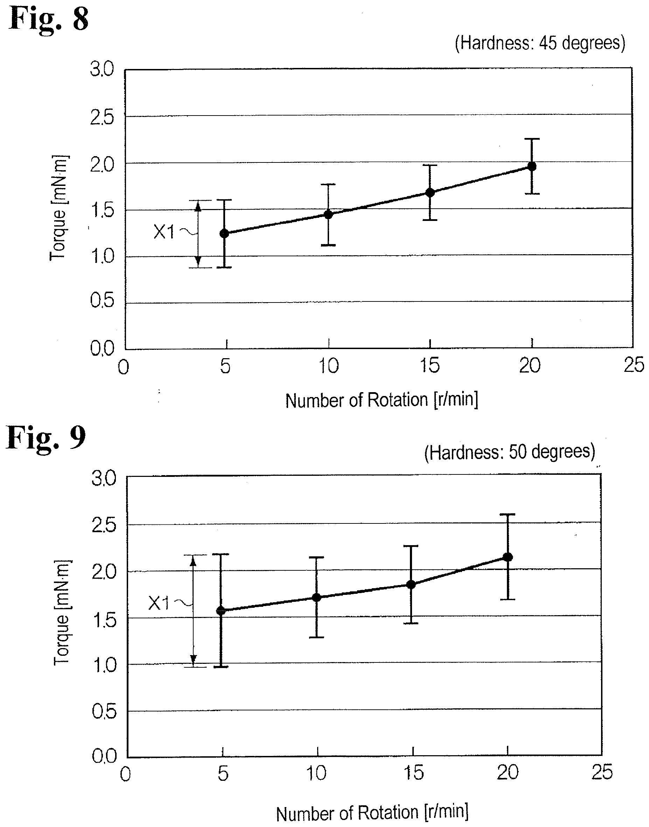

Also, Fig. 8 is a torque characteristic chart showing the rotation following capability when the hardness of the silicone rubber composing the O-ring 30 is 45 degrees.

Also, Fig. 9 is a torque characteristic chart showing the rotation following capability when the hardness of the silicone rubber composing the O-ring 30 is 50 degrees.

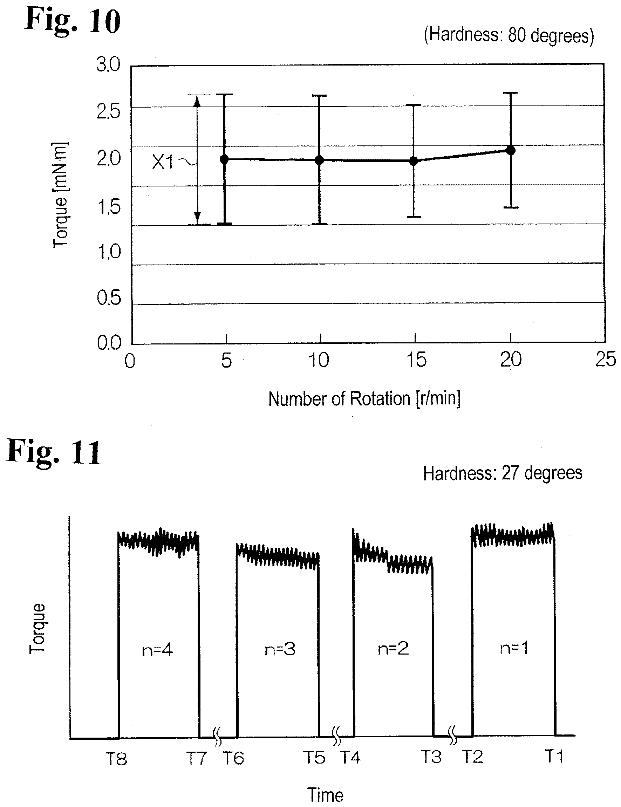

Also, Fig. 10 is a torque characteristic chart showing the rotation following capability when the hardness of the silicone rubber composing the O-ring 30 is 80 degrees.

Incidentally, in Fig. 5 to Fig. 10, a vertical axis represents the torque (mN·m), and a horizontal axis represents a rotation number (r/min). Also, a range X1 in each figure shows the variability of the measurement sample number n.

### (Second measurement)

Also, in the present embodiment, a time variation (an air torque waveform) of the torque of each rotation damper 10 is respectively measured. Incidentally, the O-ring used for the second measurement is the same O-ring as the first measurement.

In a measurement method of the air torque waveform, the rotation damper 10 is disposed in the attachment on the lower side of the micro torque measurement device (type MD-202R manufactured by ONO SOKKI CO., LTD.) and is rotated, and the torque is measured n = four times by the torque detection portion on the upper side of the micro torque measurement device. Incidentally, the temperature at the measurement time is 23°C ± 2°C.

### (Result of the second measurement)

Fig. 11 is the time variation of the torque when the hardness of the silicone rubber composing the O-ring 30 is 27 degrees.

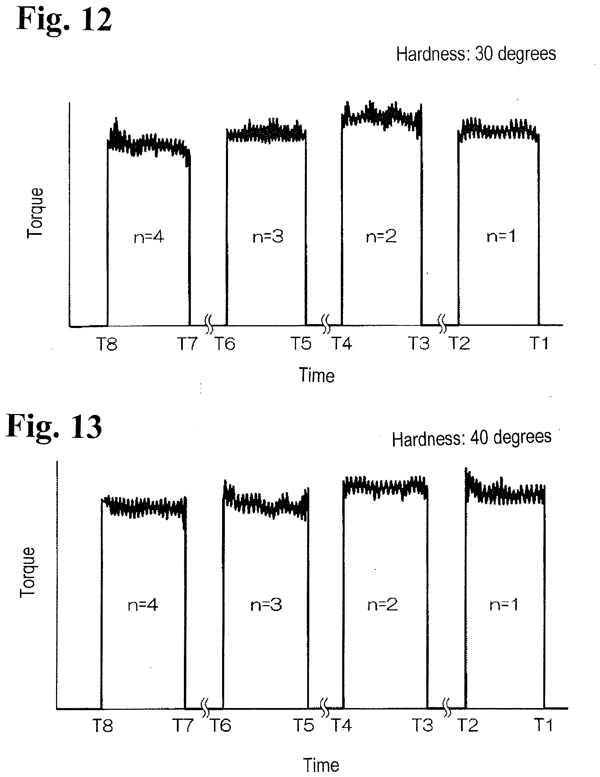

Also, Fig. 12 is the time variation of the torque when the hardness of the silicone rubber composing the O-ring 30 is 30 degrees.

Also, Fig. 13 is the time variation of the torque when the hardness of the silicone rubber composing the O-ring 30 is 40 degrees.

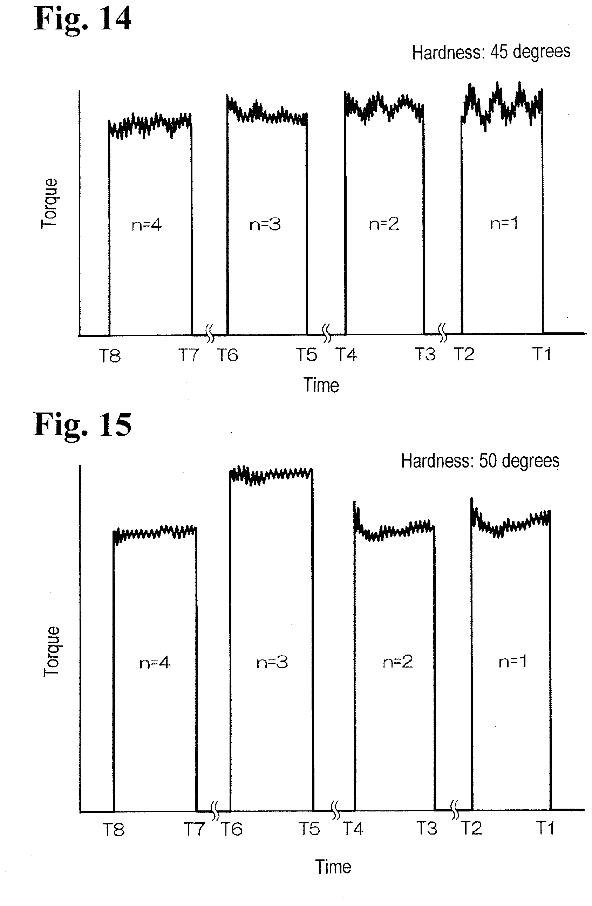

Also, Fig. 14 is the time variation of the torque when the hardness of the silicone rubber composing the O-ring 30 is 45 degrees.

Also, Fig. 15 is the time variation of the torque when the hardness of the silicone rubber composing the O-ring 30 is 50 degrees.

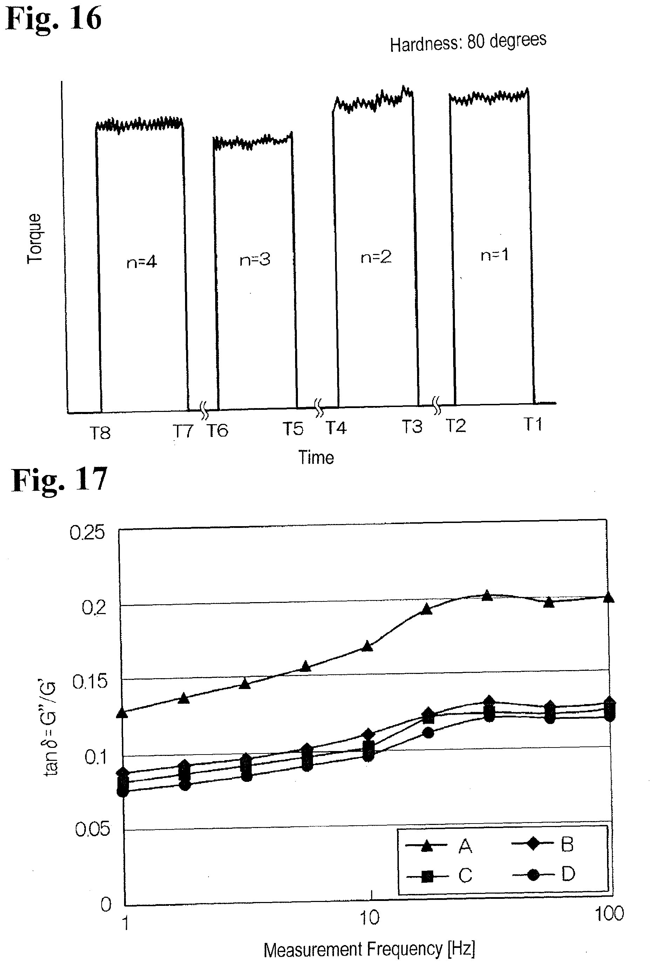

Also, Fig. 16 is the time variation of the torque when the hardness of the silicone rubber composing the O-ring 30 is 80 degrees.

Incidentally, in Fig. 11 to Fig. 16, the vertical axis represents the torque (gf·cm), and the horizontal axis represents a time (min). Also, T1, T3, T5, and T7 in each figure show a measurement starting time, and T2, T4, T6, and T8 show a measurement completion time.

Results of the above-mentioned first and second measurements show that in a case where the silicone rubber composing the O-ring 30 of the rotation damper 10 has the hardness of 45 degrees or less according to the Durometer Hardness Testing (type A) of JIS K 6253, the variability of the torque of the rotation damper 10 caused by the O-ring 30 is suppressed. As a result, by making the silicone rubber composing the O-ring 30 of the rotation damper 10 with the hardness of 45 degrees or less according to the Durometer Hardness Testing (type A) of JIS K 6253, the starting torque of the rotation damper 10 can be reduced, and also the variability of the torque in the low-speed rotational area can be reduced.

Incidentally, if the above-mentioned hardness of the silicone rubber composing the O-ring 30 of the rotation damper 10 exceeds 45 degrees, the above-mentioned effect cannot be obtained. Also, if the hardness of the silicone rubber does not reach 25 degrees, due to the lack of the hardness of the silicone rubber, molding the O-ring 30 becomes difficult. Consequently, the hardness in the silicone rubber, i.e., the hardness according to the Durometer Hardness Testing (type A) of JIS K 6253 is made 25 degrees or above and 45 degrees or less.

### (Third measurement)

In the present embodiment, the loss tangent of the silicone rubber (A, B, C, and D in Table 1) composing the O-ring 30 is calculated.

**[Table 1]**

| Silicone rubber | A | B | C | D |
|---|---|---|---|---|
| Material hardness | A32 | A34 | A36 | A35 |
| Specific gravity | 1.136 | 1.116 | 1.116 | 1.129 |
| Tensile strength (Mpa) | 8.69 | 7.36 | 7.07 | 8.69 |
| Stretch (%) | 690 | 530 | 530 | 560 |
| Tear strength (N/mm) | 21.6 | 19.4 | 20.5 | 20.8 |

The loss tangent (tan δ) of the silicone rubber (A, B, C, and D) in each frequency = loss elastic modulus (a viscous component) / storage elastic modulus (an elastic component) is calculated. At that time, the loss elastic modulus is measured using a viscoelasticity measuring instrument (a rheometer manufactured by RheoLab Ltd.), and a measurement strain is measured within a linear strain area with a constant measurement temperature 25°C. Incidentally, the O-ring used for the third measurement has the same shape as that in the first measurement.

### (Result of the third measurement)

Fig. 17 is a graph showing a relationship between each measurement frequency and the loss tangent when the silicone rubber composing the O-ring 30 is A, B, C, and D.

Incidentally, in Fig. 17, the vertical axis represents the tan δ (the loss tangent = the loss elastic modulus / the storage elastic modulus), and the horizontal axis represents the measurement frequency (Hz).

### (Fourth measurement)

Also, in the present embodiment, there is measured the time variation (the air torque waveform) of the torque of the rotation damper 10 when the silicone rubber composing the O-ring 30 is A, B, C, and D.

In the measurement method of the air torque waveform, the rotation damper 10 is disposed in the attachment on the lower side of the micro torque measurement device (type MD-202R manufactured by ONO SOKKI CO., LTD.) and is rotated, and the torque is measured n = three times by the torque detection portion on the upper side of the micro torque measurement device. Also, the temperature at the measurement time is 23°C ± 2°C. Incidentally, the O-ring used for the fourth measurement is the same as that in the third measurement.

### (Result of the fourth measurement)

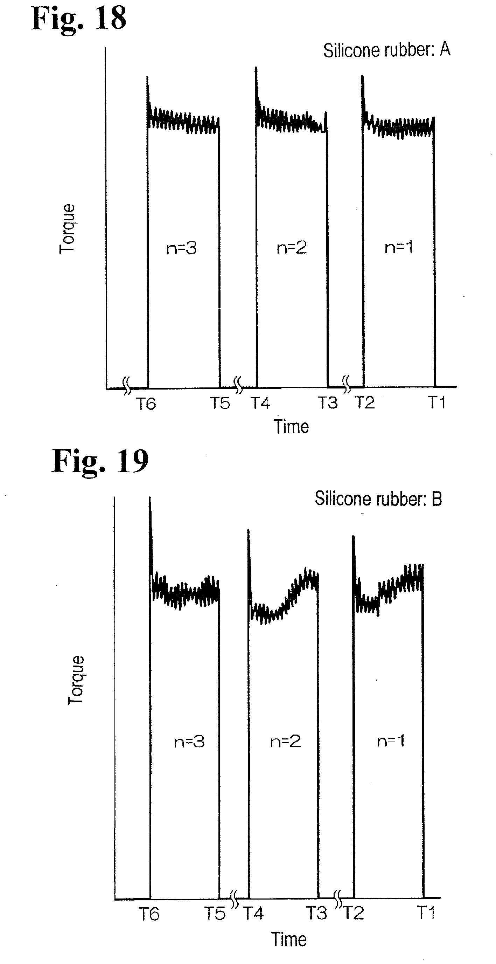

Fig. 18 is the time variation of the torque when the silicone rubber composing the O-ring 30 is A.

Also, Fig. 19 is the time variation of the torque when the silicone rubber composing the O-ring 30 is B.

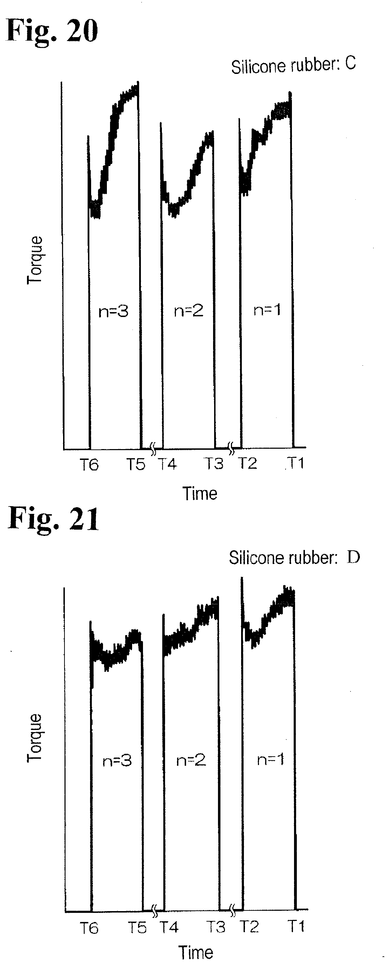

Also, Fig. 20 is the time variation of the torque when the silicone rubber composing the O-ring 30 is C.

Also, Fig. 21 is the time variation of the torque when the silicone rubber composing the O-ring 30 is D.

Incidentally, in Fig. 18 to Fig. 21, the vertical axis represents the torque (gf·cm), and the horizontal axis represents the time (min). Also, T1, T3, and T5 in each figure show the measurement starting time, and T2, T4, and T6 show the measurement completion time.

A result of the above-mentioned fourth measurement shows that when the silicone rubber composing the O-ring 30 is A, there is no starting torque, and the torque waveform is stable. Also, a result of the above-mentioned third measurement shows that when the silicone rubber is A, the loss tangent tan δ (the loss tangent = the loss elastic modulus / the storage elastic modulus) in the frequency of 1Hz is 0.12 or above. As a result, in the silicone rubber composing the O-ring 30 of the rotation damper 10, if the loss tangent tan δ (the loss tangent = the loss elastic modulus / the storage elastic modulus) is 0.12 or above at the temperature of 23°C ± 2°C obtained from the dynamic viscoelastic measurement in the frequency of 1Hz, the stick-slip caused by the O-ring 30 is difficult to occur in the rotation damper 10, and the torque waveform stabilizes.

Incidentally, in the silicone rubber, in the case where the loss tangent does not reach 0.12, the aforementioned effect cannot be obtained. Also, if the loss tangent of the silicone rubber composing the O-ring 30 exceeds 0.25, due to the lack of the hardness of the silicone rubber, molding the annular seal material becomes difficult. Consequently, in the silicone rubber composing the O-ring 30, the loss tangent is made 0.12 or above and 0.25 or less at the temperature of 23°C ± 2°C obtained from the dynamic viscoelastic measurement in the frequency of 1Hz.

### (Fifth measurement)

Also, the rotation damper using the O-ring made by the silicone rubber (the hardness of 35 degrees) of the present embodiment, and a rotation damper of a comparative example using an O-ring made by an EPDM (the hardness of 50 degrees) are respectively attached to an opening and closing door of the same in-car console box, and a variability of an opening actuation time is measured. Incidentally, the measurement sample number n is 30.

### (Result of the fifth measurement)

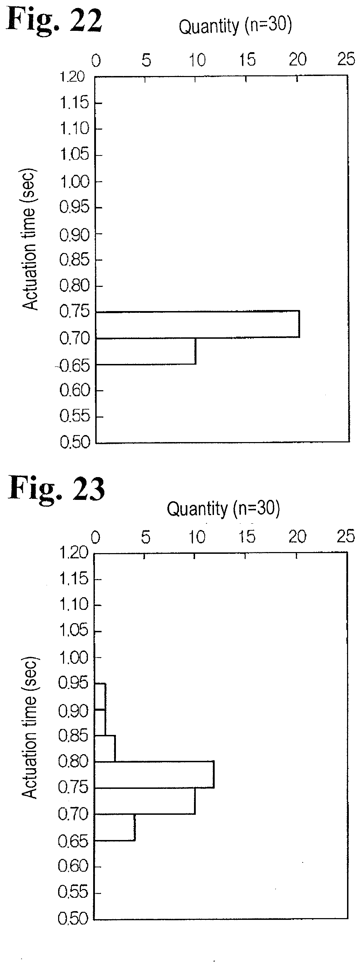

Fig. 22 is a graph showing a distribution of the opening actuation time of the opening and closing door of the in-car console box in which the rotation damper of the present embodiment is attached.

Fig. 23 is a graph showing a distribution of the opening actuation time of the opening and closing door of the in-car console box in which the rotation damper of the comparative example is attached.

Incidentally, in Fig. 22 and Fig. 23, the vertical axis represents an actuation time (sec), and the horizontal axis represents the quantity n.

A result of the above-mentioned fifth measurement shows that the in-car console box, in which the rotation damper of the present embodiment is attached, has little variability of the actuation time compared to the in-car console box in which the rotation damper of the comparative example is attached.

### (Sixth measurement)

Also, the rotation damper using the O-ring made by the silicone rubber (the hardness of 35 degrees) of the present embodiment, and the rotation damper of the comparative example using the O-ring made by the EPDM (the hardness of 50 degrees) are respectively attached to the opening and closing door of the same in-car console box, and a relationship between a time course and an angular velocity at a time of an opening actuation is measured. Incidentally, the measurement sample number n is 30.

### (Result of the sixth measurement)

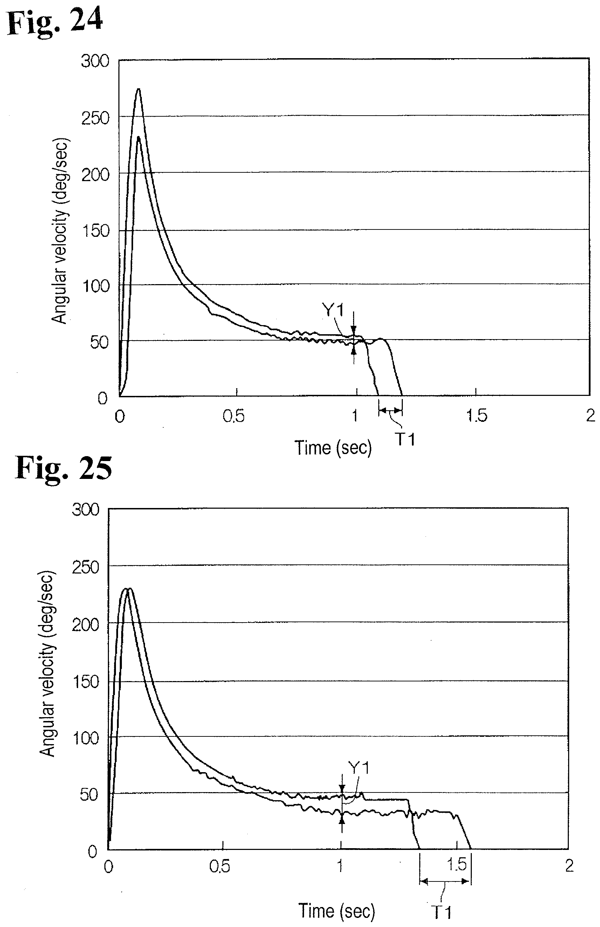

Fig. 24 is a graph showing the relationship between the time course and the angular velocity at the time of the opening actuation of the opening and closing door of the in-car console box in which the rotation damper of the present embodiment is attached.

Fig. 25 is a graph showing a relationship between the time course and the angular velocity at the time of the opening actuation of the opening and closing door of the in-car console box in which the rotation damper of the comparative example is attached.

Incidentally, in Fig. 24 and Fig. 25, the vertical axis represents the angular velocity (deg/sec), and the horizontal axis represents the time (sec).

A result of the above-mentioned sixth measurement shows that the in-car console box, in which the rotation damper of the present embodiment is attached, has small actuation variability (a range of Y1 in Fig. 24 and Fig. 25) at a time of a low angular velocity (the second half of the opening actuation), and also has small variability (a range of T1 in Fig. 24 and Fig. 25) in the overall opening actuation time compared to the in-car console box in which the rotation damper of the comparative example is attached.

### (Seventh measurement)

Also, in the present embodiment, the rotation damper using the O-ring 30 (the hardness of 35 degrees), which is manufactured using a NAK55 material manufactured by Daido Steel Co., Ltd. for a mold, and is produced by treatment with a sandblasting (SB#120, SB#220, SB#320, and SB#400) on a molded surface of the mold, is respectively attached to the opening and closing door of the same in-car console box, and the variability of the opening actuation time is measured. Incidentally, the measurement sample number n is 5.

### (Result of the seventh measurement)

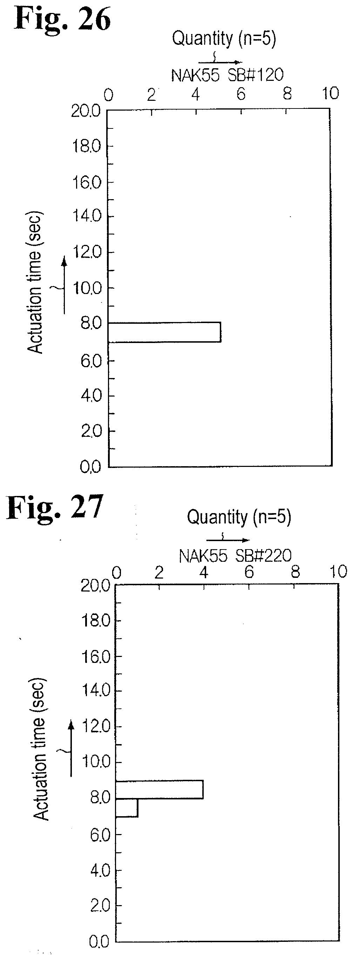

Fig. 26 is a graph showing a distribution of the opening actuation time of the opening and closing door of the in-car console box in which the rotation damper using the O-ring, produced by treatment with the sandblasting (SB#120) in the mold, is attached.

Fig. 27 is a graph showing a distribution of the opening actuation time of the opening and closing door of the in-car console box in which the rotation damper using the O-ring, produced by treatment with the sandblasting (SB#220) in the mold, is attached.

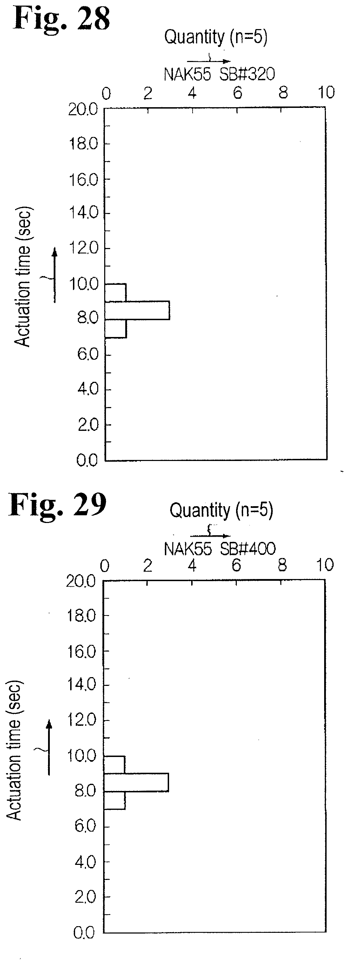

Fig. 28 is a graph showing a distribution of the opening actuation time of the opening and closing door of the in-car console box in which the rotation damper using the O-ring, produced by treatment with the sandblasting (SB#320) in the mold, is attached.

Fig. 29 is a graph showing a distribution of the opening actuation time of the opening and closing door of the in-car console box in which the rotation damper using the O-ring, produced by treatment with the sandblasting (SB#400) in the mold, is attached.

Incidentally, in Fig. 26 to Fig. 29, the vertical axis represents the actuation time (sec), and the horizontal axis represents the quantity n.

A result of the above-mentioned seventh measurement shows that by making an outer circumferential surface of the O-ring 30 smooth using the NAK55 material manufactured by Daido Steel Co., Ltd. in the mold, which manufactures the O-ring 30, by treatment with the sandblasting (SB#120 or SB#220) on the molded surface, the variability of the actuation time is reduced compared to the sandblasting (SB#320 or SB#400). Incidentally, the sandblasting (SB#220) which improves a durability performance of the O-ring 30 is preferred.

### (Other embodiments)

In the above, although a specific embodiment of the present invention is explained, the present invention is not limited to the embodiment described hereinabove, and it is obvious to those ordinarily skilled in the art that other various embodiments can be made within the scope of the present invention. For example, in the above-mentioned embodiment, although the silicone oil 18 is used as the damper oil, instead of the silicone oil 18, highly-refined paraffinic base oil and the like may be used as the damper oil.

Also, in the above-mentioned embodiment, although the O-ring 30 with a circular shape of a cross-sectional surface is used as the annular seal material, another annular seal material such as an O-ring with another shape of the cross-sectional surface and the like may be used.

## Claims

1. A damper (10), comprising:
a housing (12);
a damper oil (18) filled inside the housing (12);
a rotor including a rotating shaft (22) with one portion protruding from the housing (12), and a rotor brake plate (24) connected to a lower end portion of the rotating shaft (22) and rotatably housed inside the housing (12); and
an annular seal material (30) disposed between the housing (12) and the rotating shaft (22) to prevent the damper oil (18) from leaking outside of the housing (12),
wherein the annular seal material (30) is formed by a silicone rubber having a hardness of 25 degrees or above and 45 degrees or less according to Durometer Hardness Testing (type A) of JIS K 6253,
**characterized in that**
the silicone rubber has a loss tangent of 0.12 or above and 0.25 or less at a temperature of 23ºC ± 2ºC obtained from a dynamic viscoelastic measurement in a frequency of 1 Hz.

## Patentansprüche

1. Dämpfer (10), umfassend:
ein Gehäuse (12);
Dämpferöl (18), mit dem das Gehäuse (12) befüllt ist;
einen Rotor mit einer Drehwelle (22), wobei ein Abschnitt aus dem Gehäuse (12) herausragt, und eine Rotorbremsplatte (24), die mit einem unteren Endabschnitt der Drehwelle (22) verbunden und drehbar im Inneren des Gehäuses (12) aufgenommen ist; und
ein ringförmiges Dichtungsmaterial (30), das zwischen dem Gehäuse (12) und der Drehwelle (22) angeordnet ist, um zu verhindern, dass Dämpferöl (18) aus dem Gehäuse (12) austritt,
wobei das ringförmige Dichtungsmaterial (30) aus Silikonkautschuk mit einer Härte von 25 Grad oder mehr und 45 Grad oder weniger gemäß dem Durometer-Härtetest (Typ A) gemäß JIS K 6253 hergestellt ist,
**dadurch gekennzeichnet, dass**
der Silikonkautschuk einen Verlusttangens von 0,12 oder mehr und 0,25 oder weniger bei einer Temperatur von 23°C ± 2°C aufweist, der bei einer dynamischen viskoelastischen Messung bei einer Frequenz von 1 Hz erhalten wurde.

## Revendications

1. Amortisseur (10) comprenant :
un logement (12) ;
une huile d'amortisseur (18) remplie dans le logement (12) ;
un rotor comportant un arbre rotatif (22) avec une partie saillant à partir du logement (12) et une plaque de frein de rotor (24) reliée à une partie d'extrémité inférieure de l'arbre rotatif (22) et logée en rotation à l'intérieur du logement (12) ; et
un matériau d'étanchéité annulaire (30) disposé entre le logement (12) et l'arbre rota-tif (22) afin d'empêcher l'huile d'amortisseur (18) de fuir à l'extérieur du logement (12),
en ce que le matériau d'étanchéité annulaire (30) est formé par un caoutchouc de silicone ayant une dureté de 25 degrés ou plus et 45 degrés ou moins conformément à l'essai de dureté au duromètre (de type A) JIS K 6253,
**caractérisé en ce que** le caoutchouc de silicone a une tangente d'angle de perte de 0,12 ou plus et 0,25 ou moins à une température de 23 °C ± 2 °C obtenue à partir d'une mesure de viscoélasticité dynamique dans une fréquence de 1 Hz.
